# EUROPEAN PATENT APPLICATION

(11) **EP 3 758 110 A1**
(43) Date of publication of application: **30.12.2020**
(21) Application number: 19305827.8
(22) Date of filing: 24.06.2019
(51) Int. Cl.: H01M 4/131, C01G 53/00, H01M 4/36, H01M 4/525, H01M 10/054

(54) **LAYERED ACTIVE MATERIAL FOR NA-ION BATTERIES**

(71) Applicant: Centre National de la Recherche Scientifique, 75016 Paris (FR); College de France, 75005 Paris (FR); SORBONNE UNIVERSITE, 75006 Paris (FR)
(72) Inventor: TARASCON, Jean-Marie, 75014 Paris (FR); MARIYAPPAN, Sathiya, 75013 Paris (FR); MARCHANDIER, Thomas, 75013 Paris (FR)
(74) Representative: LLR

(57) **Abstract**

A compound of formula I: NaₓNi_{0.5-y}Zn_{y}Mn_{0.5-z}Ti_{z}O₂ (I), wherein x is a number ranging from 0.7 and 1.1, y is a number superior to 0 and up to 0.1, and z is a number between 0 and 0.5., batteries incorporating the compound and its use in particular as an positive electrode material for Na-ion batteries and cells.

## Description

### FIELD OF THE INVENTION

The present invention generally relates to a novel sodium layered oxide compound, to a device incorporating said compound such as an electrode comprising said sodium layered oxide compound, or in an electrochemical energy storage cell or device for example a Na-ion battery. It further relates to a method to manufacture and/or to use such a compound and devices incorporating them.

### BACKGROUND OF THE INVENTION

Sodium ion (Na-ion) batteries are growing rapidly as a potential energy storage technology for applications in which cost rather than weight and/or energy density of the cell is a determining factor.

Several prototypes of sodium ion batteries, using polyanionic compounds (e.g. Na₃V₂(PO₄)₂F₃, named hereafter NVPF) as a positive electrode material, have been proposed. The results have been acceptable but the use of a rare and toxic element such as vanadium has undesirable environmental consequences.

Alternative compounds have been investigated such as layered sodium transition(s) metal oxides (e.g. NaₓMO₂, wherein x can be up to 1, and M is at least one transition metal ion(s)). NaₓMO₂ could be stabilized in different layered stacking according to the amount x of sodium it contains. For example, NaₓMO₂ is an O3-type layered oxide when x is about 1 and can be a P2, P3-type layered oxide when x is below or equal to 0.8 (see refs.1, 2). In the used nomenclature such as 03, P2, P3, the letter O or P represents respectively the sodium in octahedral (O) or prismatic (P) site and the number represents the number of MO₂ layers in the unit cell, the smallest repeating unit having the full symmetry of the crystal structure (ref. 3).

NaₓMO₂ has a lower molecular weight than NVPF. Therefore, theoretical higher values of specific capacity and specific energy at a given voltage range were expected for sodium layered oxides, compared to NVPF compounds (refs. 4, 5).

However, the sodium layered oxides reported so far have shown poorer capacity retention than NVPF over hundreds of cycles. (refs. 6, 7). In fact, the sodium layered oxides undergo a volume shrinkage and/or swelling due to several phase transitions. As a matter of fact, hardly 50% of the theoretical capacity is achieved with O3-NaₓMO₂ as the material suffers with continuous phase transition during cycling, especially in the extended voltage range, i.e. a voltage higher than 4.0 V vs. Na⁺/Na (refs. 6, 9). The P2 and P3 sodium layered oxides NaₓMO₂, having less than one sodium per transition metal ion showed limited capacity. Hence the achievable specific energy, which is a product of the average redox voltage of the cell and the specific capacity in a Na-ion full-cell, is always lower than the stoichiometric 03 type NaₓMO₂ when typical P2/ P3 NaₓMO₂ is used at the positive electrode.

Apart from the phase transitions during cycling, the low redox potential and moisture sensitivity of the material, which requires the storing and processing of these layered oxides in an inert atmosphere, are other major problems of the use of 03 NaₓMO₂ materials.

Various modifications of the layered NaₓMO₂ material have been proposed in order to improve their electrochemical properties. In particular, it was proposed in the following documents to add Ni cations within the O3-NaNi_{0.5})Mn_{0.5}O₂ (named hereafter NM) to partially replace Mn⁴⁺. Mariyappan et al. proposed in *Adv. Energy Mater.,* **8**, 1702599 (2018) (ref. 8), another partial Mn⁴⁺ substitution with Sn⁴⁺ within 03-NaNi_{0.5}Mn_{0.5}O₂ in order to obtain NaNi_{0.5}Mn_{0.5-x}SnₓO₂, wherein x is a number between 0 and 0.5.

Zheng et al. proposed in Electrochimica Acta, 233, 284-291 (2017) (ref. 9), a partial Mn⁴⁺ substitution with Ti⁴⁺ to obtain Na_{0.9}Ni_{0.45}MnₓTi_{0.55-x}O₂, wherein x is a number between 0 and 0.55.

WO 2014 009 710 A1 describes alkaline layered oxide compounds such as Na_{1.05}Ni_{0.4}Mn_{0.5}Mg_{0.025}Ti_{0.025}O₂ and Na_{1.05}Ni_{0.4}Ti_{0.025}Mg_{0.025}Mn_{0.5}O₂.

WO 2014 132 174 A1 describes alkaline layered oxide compounds such as Na_{1.05}Ni_{0.40}Mn_{0.50}Mg_{0.025}Ti_{0.025}O₂.

US 2015 020 713 8 A1 describes sodium layered oxide compounds such as NaNi_{0.50}Mn_{0.25}Ti_{0.25}O₂, NaNi_{0.5}Mn_{0.225}Ti_{0.225}Zr_{0.05}O₂, and NaNi_{0.5}Mn_{0.2}Ti_{0.2}Zr_{0.1}O₂.

US 2015 013 703 1 A1 describes processes to obtain an alkaline layered oxide compounds, such as NaNi_{0.4}Mn_{0.4}Cu_{0.1}Ti_{0.1}O₂, NaNi_{0.45}Mn_{0.45}Cu_{0.05}Ti_{0.05}O₂, NaNi_{0.45}Mn_{0.45}Mg_{0.05}Ti_{0.05}O₂ in order to convert sodium ion materials into lithium ion materials using an ion exchange process.

None of the above documents discloses the partial substitution of Ni²⁺ by Zn²⁺ in order to obtain a more moisture stable component and/or a better, or at least equivalent, electrochemical performance than the one obtained with NVPF, especially at a voltage higher than 4.0 V.

### DESCRIPTION OF THE INVENTION

It is therefore an object of the invention to provide a new electroactive compound of the layered sodium oxide type, and electrochemical energy storage devices containing such compound, which would overcome one or several of these drawbacks of the materials and devices of the prior art and/or has one or more of the following properties:
- a long-life cycle and in particular a higher energy retention over a hundred of cycles compared to NVPF;
- enabling cycling at a voltage higher than to 4.0 V by preserving at least 70% of the initial energy density;
- stability in a moist environment; and
environmentally acceptable or at least less toxic than vanadium or other available alternatives.

It has now been found that introducing Zn²⁺ in an O3-type NaNi_{0.5}Mn_{0.5}O₂ (NM) layered oxide provides, in particular in presence of titanium, a compound that is unexpectedly provided with at least one, and preferably more of the above-mentioned properties.

Therefore one object of the invention is a compound of formula NaₓNi_{0.5-y}Zn_{y}Mn_{0.5-z}Ti_{z}O₂ (hereafter named ZNMT), wherein x is a number ranging from 0.7 to 1.1, y is greater than 0 and less or equal to 0.1, and z is a number between 0 to 0.5 (greater than 0 and less than 0.5). x may range from 0.8 to 1.1. and, preferably, x is about 1 or equal to 1. Such a compound is electrochemically active.

The active compound is preferably a compound of formula NaₓNi_{0.5-y}Zn_{y}Mn_{0.5-z}Ti_{z}O₂, wherein x is about 1, y is a number ranging from 0.01 to 0.1, and z is a number ranging from 0.01 to 0.45. The active compound is also preferably a compound of formula NaₓNi_{0.5-y}Zn_{y}Mn_{0.5-z}Ti_{z}O₂, wherein x is about 1, y is a number ranging from 0.03 to 0.1, and z is a number ranging from 0.05 to 0.25. It is further preferred that the active compound is of formula NaₓNi_{0.5-y}Zn_{y}Mn_{0.5-z}Ti_{z}O₂, wherein x is about 1, y is a number ranging from 0.04 to 0.1, and z is a number ranging from 0.08 to 0.22.

The following compounds are also preferred: NaNi_{0.45}Zn_{0.05}Mn_{0.4}Ti_{0.1}O₂ (named hereafter as ZNMT1), NaNi_{0.4}Zn_{0.1}Mn_{0.4}Ti_{0.1}O₂ (named hereafter as ZNMT2) and NaNi_{0.45}Zn_{0.05}Mn_{0.3}Ti_{0.2}O₂ (named hereafter as ZNMT3) and their derivatives. By derivative it is meant that each the atomic percentage of each element can vary from ± 10%.

The sodium layered oxide compound of the invention can advantageously be in a powdered form. Preferably, the layered oxide powder can be prepared with ball milling, preferably with powder to ball weight ratio of 1:20.

Another object of the invention is a conductive material which comprises the layered oxide compound (or active compound) and an electronically conductive additive. The electronically conductive additive may comprise, essentially consist or consist of carbon black (i.e. entirely disordered or substantially disordered carbon, CAS:1333-86-4) such as super-P™, C-45™, C-65™, acetylene black, Ketjen Black™, volcano carbon etc., usually in a powder form. Substantially disordered carbon containing a small proportion of graphitized carbon is preferred. This conductive material can be prepared using ball milling of the layered oxide powder and of the other conductive material can be prepared with ball milling, preferably with powder to ball weight ratio of 1:35. The material can be used in particular to manufacture positive electrode, (i.e. as a positive electrode material).

The concentration of the electronically conductive additive preferably ranges from 10 to 20 w/w % in respect of the total weight of the layered oxide compound(s) and of the conductive additive. Preferably the concentration is about 15 w/w %.

According to a particular embodiment, no polymer binder is present, more preferably no binding materials are used. The conductive material can be in the shape of a powder, which can be compressed into shape (e.g. a disc) or not.

Alternatively, the conductive material can further comprise a binder material which allows its casting into shape. This binder can be a polymer binder. The polymer binder can advantageously comprise, consist or essentially consist of polyvinylidene fluoride and/or its derivatives. The binder material can be admixed with a suitable solvent, which is advantageously non-aqueous (e.g. organic) such as N-methyl pyrrolidine (NMP), before it is cast onto a support.

In one embodiment, the compound of the invention has an initial discharge specific capacity of at least 120 mAh·g⁻¹, preferably of at least about 150 mAh·g⁻¹, and advantageously 220 mAh·g⁻¹, as measured at a discharge rate which may range from C/30 to 1C, in particular which may be a discharge rate of about C/10. A C/10 rate corresponds to a total removal from, or insertion to, sodium ions from the compounds of the invention in 10 hours. For example, the initial discharge capacity may range from 140 mAh·g⁻¹ to 250 mAh·g⁻¹.

In another embodiment, the compound of the invention has a specific energy (Wh·kg⁻¹) which is a product from specific capacity expressed in Ah·kg⁻¹ and average redox potential of the cell, expressed in volts. The specific energy can be normalized for the total mass of electrode material on both positive and negative electrodes.

In another embodiment of the compound of the invention the specific energy of the cell is at least about 200 Wh·kg⁻¹ when cycled at a voltage inferior to 4 V and/or the specific energy is at least about 250 Wh·kg⁻¹ when cycled at a voltage superior to 4 V. For example, the specific energy may range from 200 Wh·kg⁻¹ to 300 Wh·kg⁻¹, preferably from 240 Wh·kg⁻¹ to 270 Wh·kg⁻¹.

The capacity retention (or charge retention) can be defined as the fraction of the initial discharge specific capacity available under specific conditions of discharge. The energy retention can be defined as the fraction of the initial specific energy available under specific conditions of discharge. By initial capacity/Initial energy it is meant that the specific capacity/energy obtained at the end of the first complete cycle at a discharged state (i.e. sodiated state).

In another preferred embodiment, the compound of the invention has an energy retention superior to 70 % over a hundred cycles when cycled at a voltage superior to 4 V. In particular the voltage may be chosen between 4 and 5 V, preferably at 4.4 V. The percentage energy retention of the compound of the invention may range from 73% to 99%; preferably from 78 % to 95%, e.g. from 80 to 90%.

According to another embodiment the energy retention is superior to 80 % over a hundred cycles when cycled at a voltage up to 4 V, preferably over or around 90%.

According to another aspect, the invention features an electrochemical cell which comprises:
- a negative electrode configured to reversibly accept sodium ions from an electrolyte and to reversibly release sodium ions to an electrolyte, the negative electrode having at least one current collector;
- a positive electrode comprising a sodium layered oxide compound according to the invention, configured to reversibly accept sodium ions from the electrolyte and to reversibly release sodium ions to an electrolyte, the positive electrode having at least one current collector; and
- a separator soaked with the electrolyte, said electrolyte comprising sodium ions, said separator being in contact with both the negative and positive electrodes.

In one preferred embodiment, the positive electrode comprises, consists, or consists essentially of the conductive material of the invention as described above which is then used as a positive electrode material. The electronically conductive material additive is advantageously carbon black.

In one embodiment, the negative electrode has an active material which comprises, consists or essentially consists of sodium metal. This is particularly the case when the electrochemical cell is in half-cell configuration.

In another embodiment, which is actually preferred, the negative electrode has an active material which can comprise, consist essentially of, or consist of hard carbon, antimony, tin, phosphorus and a combination thereof. Such a material is particularly adapted to a full-cell configuration.

In a preferred embodiment, the negative electrode comprises a carbonaceous compound, preferably a hard carbon powder as an active material. Raman spectra of hard carbon exhibit two characteristic bands at ca. 1350 (D-band) and 1580 (G-band) cm⁻¹ corresponding respectively to the E2g graphitic mode and the defect-induced mode. The hard carbon powder may have particles sized of 1-20 µm and a specific surface of 1-10 m²·g⁻1. The active material can be mixed with an electronically conductive additive such as carbon black to obtain a material for the negative electrode. The concentration of electronically conductive material may range from 1 to 8 w/w %, for example 4 w/w %, in respect of the total weight of the active material and the additive.

Such a negative electrode material can further comprise a binder material which allows its casting into shape, and/or have cohesive, conductive or dispersive properties. This binder can be a polymer binder. The polymer binder can advantageously comprise, essentially consist, or consist of carboxymethyl cellulose sodium, and/or its derivative. It can also comprise, consist or essentially consists of polyvinylidene fluoride and/or its derivatives. The binder material can be admixed with a suitable solvent such as N-methyl pyrrolidine (NMP) and/or water before it is cast onto a support.

When an active material, an electronically conductive material and a binder is used their respective proportions in weight may be for example 92:4:4.

The current collector for either or both of the electrodes can be made of any suitable material such as, for example, stainless-steel, aluminum, copper or nickel.

The electrolyte comprises a suitable salt which may advantageously be selected in the group consisting of sodium hexafluorophosphate (NaPF₆), sodium perchlorate (NaClO₄), sodium bis (fluorosulfonyl) imide (NaFSI), sodium bis(trifluoromethanesulfonyl)imide (NaTFSI), sodium bis(pentafluoroethanesulfonyl)imide (NaBETI), sodium tetrafluoroborate (NaBF₄) and a mixture thereof. The electrolyte further comprises a non-aqueous solvent, for example selected from the group consisting of dimethyl carbonate (DMC), ethyl methyl carbonate (EMC), diethyl carbonate (DEC), propylene carbonate (PC), ethylene carbonate (EC), ethyl acetate (EA), ethyl propionate (EP), methyl propionate (MP), bis(2-methoxyethyl) ether (Diglyme) and a mixture thereof. The proportion of said solvent may range from 60 w/w % to 98 w/w % in the total weight of the electrolyte

The concentration of the salt in said solvent may range from 0.1 mol·L⁻¹ to 3 mol·L⁻¹, advantageously from 0.5 mol·L⁻¹ to 2 mol·L⁻¹.

According to a preferred aspect of the invention, an electrolyte additive can be added to the electrolyte. Such an electrolyte additive can help to improve the high temperature performance and low self-discharge performance of Na ion cell or battery of the invention. The additive can be selected from the group consisting of vinylene carbonate (VC), 1,3-Propanesultone (PS), Succinonitrile (SN), Sodium difluoro(oxalato)borate (NaODFB) and a mixture thereof. The concentration of vinylene carbonate (VC) may range from 0.1 to 10 w/w %, advantageously from 0.5 to 5.0 w/w %, in respect of the total weight of the electrolyte. The concentration of 1,3-Propanesultone (PS) may range from 0.1 to 5 w/w %, preferably from 0.5 to 3.0 w/w %, in respect of the total weight of the electrolyte. The concentration of Succinonitrile (SN) may range from 0.1 to 5 w/w %, preferably from 0.5 to 2.0 w/w %, in respect of the total weight of the electrolyte. The concentration of Sodium difluoro(oxalato)borate (NaODFB) may range from 0.05 to 10 w/w %, preferably from 0.2 to 1.0 w/w %, in respect of the total weight of the electrolyte.

The separator is a permeable membrane or film, preferably microporous. The separator may be made of a material which can be selected from the group consisting of glass fiber, polyolefin separators (including polypropylene (PP) and polyethylene (PE), cellulose and a combination thereof. The separator may be an arrangement of several layers of material, in particular of PP and/or PE.

Yet another aspect of the invention is a battery which comprises one or more electrochemical cell according to the invention and may further include external connections. These connections can advantageously be adapted to connect to and power, electrical devices. The configuration of such a battery can be for example, a coin cell, a pouch cell, a cylindrical (of various dimensions, such as: 18650, 21700, 36500 etc.) cell, or a prismatic cell.

The sodium layered oxide active compound according to the invention can be prepared by solid state synthesis according to generally known principle. In a nutshell, precursors which are oxides such as Na₂CO₃, NiO, ZnO, Mn₂O₃, and TiO₂, are ground or milled together according to required proportions for example, using ball milling. The mixture is then heated at a temperature superior to 800 °C, preferably superior or equal to 900 °C, under an inert and/or air atmosphere. A process to make these compounds falls within the scope of the invention.

Likewise, the use of the compound, the conductive material, the cell or the battery of the invention in an electrochemical device is also part of the invention as well as an electrode comprising the compound of the invention and a support such as the ones above described.

The use of the battery according to the invention includes for example its incorporation in microgrids stabilizing power grids, electrochemical storage devices for intermittent renewable energy (e.g. solar, wind energy), mobile storage devices for electric vehicles (end-of-life rechargeable buses, rental vehicle fleets), domestic electrical power storage devices, emergency power-supply or energy storage device for hospitals, schools, factories, computer clusters, servers, companies, and any other public and/or private buildings or infrastructure. The compound according to the invention or a device incorporating said compound can be of use for example for industries in following fields: automobile, computer, banking, video game, leisure, creative, cultural, cosmetic, life science, aviation, pharmaceutical, metal and steel, rail, military, nuclear, naval, space, food, agriculture, construction, glass, cement, textile, packaging, electronics, petrochemical, and chemical industries.

Some technical effects associated with the compounds according to the invention are summarized as follows.

The foregoing and other objects, aspects, features and advantages of the invention will become more apparent from the following examples and from the claims.

### BRIEF DESCRIPTION OF THE DRAWINGS

The present invention will now be described with reference to the following figures in which:
Fig. 1 shows an assembly of a Swagelok type half-cell used to carry out electrochemical characterization.
Fig. 2 shows an overview of a half-cell assembly used to carry out *operando* XRD analysis.
Fig. 3 shows an exploded view of a coin-type full-cell according to the invention.
Fig. 4 shows the powder XRD patterns obtained for ZNMT1 and NM, NMT at the pristine state in comparison with the compounds exposed to 55% RH (relative humidity) for 24 h.
Fig. 5 shows (left) differential capacity plot (dQ/dV expressed in mAh g⁻¹·V⁻¹ against the voltage) obtained from the ZNMT1, NM, ZNM and NMT compounds incorporated in half-cells and (right) the voltage against specific capacity (mAh·g⁻¹) curve for the same compounds for first 5 cycles in full-cell configuration.
Fig. 6a shows the XRD patterns obtained for NZT, a compound without any Mn⁴⁺ in the structure. Fig. 6b shows the voltage against specific capacity (mAh·g⁻¹) curve for the same compounds for first 5 cycles in full-cell configuration.
Fig. 7a shows the specific discharge energy (Wh·kg⁻¹) of cells containing ZNMT1 et ZNMT2 compared with a NMT cell as a function of the cycle number. Fig. 7b shows the discharge energy retention expressed in percentage as a function of the cycle number.
Fig. 8a shows the XRD pattern obtained for ZNMT3 and Fig. 8b shows galvanostatic charge-discharge cycles for first 5 cycles obtained from a ZNMT3 cell.
Fig. 9 shows comparative full-cell cycling results (the voltage (V) against specific capacity (mAh·g⁻¹)) of a Mg-doped NMT cell compared with that of a NMT cell.
Fig. 10 shows (left) the first charge curve up to 4.0 V vs. Na⁺/Na for ZNMT, NMT, NM cells and (right) that of *operando* XRD patterns. The XRDs of the pristine phases are compared with that of the end of charge (4.0 V vs. Na⁺/Na) phases.
Fig. 11 shows the same measurements as in Fig.10, except that the charge potential was controlled up to 4.4 V vs. Na⁺/Na.
Fig. 12 shows the evolution of discharge energy (Wh·kg⁻¹), and the energy retention in percentage over fifty cycles for ZNMT1, ZNMT2 and ZNMT3 cells.
Fig. 13 shows (a) the evolution of discharge energy (Wh·kg⁻¹), and (b) the energy retention in percentage over a hundred cycles for the layered oxide according to the invention ZNMT1 and comparative examples, NMT, NM and a polyanionic compound NVPF, in full-cell configuration, within the voltage windows of 1.2-4.0 V, except for NM (1.2 - 3.8 V) and NVPF (1 - 4.65 V for first cycle, then 2 - 4.3 V for subsequent cycles).
Fig. 14 shows the same measurements as Fig. 13, but carried out within the voltage windows of 1.2-4.4 V, except for NM (1.2 - 4.2 V).

### EXAMPLES

### Example 1a: Method to synthesize layered oxide compounds according to the invention

Three compounds according to the present invention were prepared by solid state synthesis. All the precursors used in the synthesis were purchased from Sigma Aldrich with nearly 99 w/w % or above purity. The exact weight of each precursor oxides used to prepare about 1 g of the final sodium transition metal layered oxide compounds according to the invention, named ZNMT 1, 2 and 3, is shown below in Table 1.

**TABLE 1**

| Reference | Formula | Weight of used precursors (in grams) | | | | |
|---|---|---|---|---|---|---|
| | | Na₂CO₃ | NiO | ZnO | Mn₂O₃ | TiO₂ |
| ZNMT1 | NaNi_{0.45}Zn_{0.05}Mn_{0.4}Ti_{0.1}O₂ | 0.5299 | 0.3361 | 0.0407 | 0.3157 | 0.0799 |
| ZNMT2 | NaNi_{0.4}Zn_{0.1}Mn_{0.4}Ti_{0.1}O₂ | 0.5299 | 0.2988 | 0.0814 | 0.3157 | 0.0799 |
| ZNMT3 | NaNi_{0.45}Zn_{0.05}Mn_{0.3}Ti_{0.2}O₂ | 0.5299 | 0.3361 | 0.0407 | 0.2368 | 0.1597 |

The weight of each compound was calculated as per the stoichiometric ratio and no extra sodium was used in the synthesis in order to compensate the sodium loss which may occur while calcining at high temperature, i.e. above 800 °C.

For the purpose of synthesizing all the above layered oxides, the same following method was used: The powdered precursor oxides were individually weighed each according to the required stoichiometry and then mixed together. The powders were ground with a mortar and pestle for 15 minutes followed by a ball milling step for 1 hour. The ball milling step was carried out using a SPEX 8000MTM mixer mill using ball milling balls and containers made of hardened steel. Ball to powder ratio of 1:20 was used for milling the precursors. The milled precursors were collected from the ball milling vial and transferred to alumina crucibles.

During a first annealing step, the precursors were calcined at 900 °C for 12 h in air atmosphere with a heating rate of 3 °C·min⁻¹ followed by a slow cooling to 300 °C with the cooling rate of 1 °C·min⁻¹. Hence, the total reaction period was nearly 27 hours for the first calcination step (about 5 h for heating, 12 hours of dwell period at constant temperature 900 °C, and about 10 hours of cooling).

The sodium transition metal layered oxide product thus removed from the furnace at 300 °C. After cooling it until ambient temperature in air atmosphere, the oxide product was grinded (in air atmosphere) for 15 minutes with a mortar and pestle to ensure homogeneity of the material.

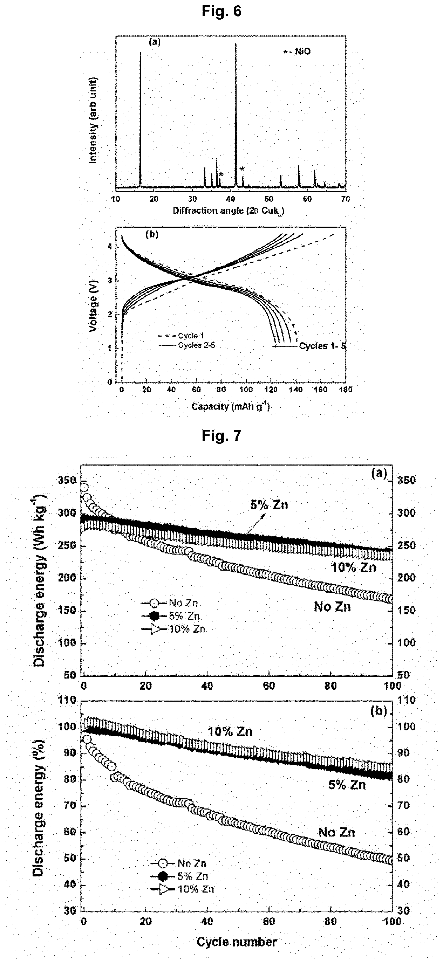

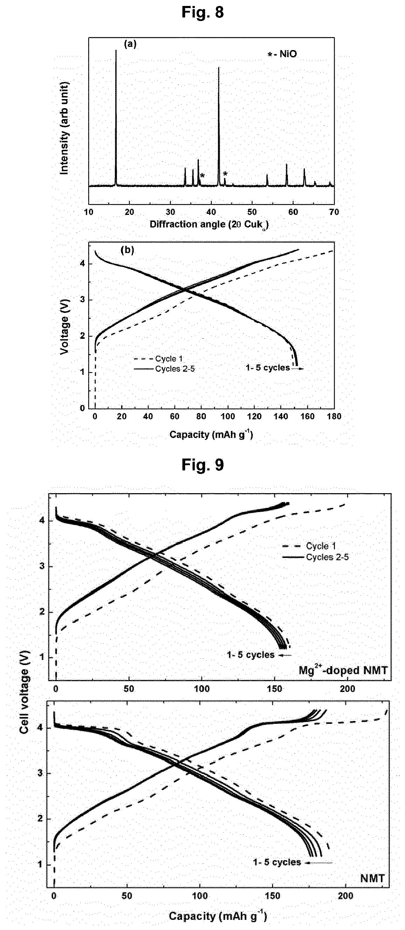

The product from the first annealing step was treated for a second annealing (or calcination) step at 1000 °C for 12 h in air. Heating and cooling rates were maintained at 3 °C·min⁻¹ and 1 °C·min⁻¹, respectively, as explained above. The oxide materials after the second calcination step were removed from the furnace when the temperature had reached 300°C and transferred immediately (within 10 minutes) to an argon filled glove box with the minimal exposure to atmospheric air, especially to moisture. The materials obtained after the second calcination step showed some NiO impurities (nearly 5 w/w %), as shown in XRD patterns in Figs 6 and 8.

### Example 1b: Method to synthesize layered oxide compounds

In order to demonstrate the advantageous characteristics and properties of the compounds of the invention, these were compared to other sodium transition metal 03 layered oxide oxides not part of the invention. They were prepared according to the same method which is described in Example 1a. Again, the exact weight of each precursor used to prepare about 1 g of these comparative oxides is shown below in Table 2.

**TABLE 2**

| Reference | Target formula | Weight of used precursors (in grams) | | | | | |
|---|---|---|---|---|---|---|---|
| | | Na₂CO₃ | NiO | ZnO | Mn₂O₃ | TiO₂ | Mg(NO₃)₂. 6H₂O |
| NM | NaNi_{0.5}Mn_{0.5}O₂ | 0.5299 | 0.3735 | - | 0.3947 | - | - |
| NMT | NaNi_{0.5}Mn_{0.4}Ti_{0.1}O₂ | 0.5299 | 0.3735 | - | 0.3157 | 0.0799 | - |
| ZNM | NaNi_{0.45}Zn_{0.05}Mn_{0.5} O₂ | 0.5299 | 0.3361 | 0.04 07 | 0.3947 | - | - |
| NZT | NaNi_{0.45}Zn_{0.05}Ti_{0.5} O₂ | 0.5299 | 0.3361 | 0.04 07 | - | 0.3994 | - |
| NMMT | NaNi_{0.5}Mg_{0.05}Mn_{0.4} Ti_{0.1}O₂ | 0.5299 | 0.3361 | - | 0.3157 | 0.0799 | 0.1282 |

### Example 2: Structural characterization of the synthesized powdered compounds by X-ray diffraction (XRD) analysis

The phase purity and structure of the materials were analyzed by powder X-ray diffraction (XRD) analysis. X-ray diffractive measurement such as X-ray diffraction (XRD) is carried out to determine the crystalline structure of synthesized compounds and/or materials. XRD can be carried out *operando,* in order to monitor crystalline structure of the compounds and/or of the materials during a realistic cycling condition, using a specific cell designed for this purpose. As a result, no demounting of the cell is necessary and thus the environment in which the active compounds are located is preserved during the non-destructive measurement, such as XRD. In addition, this type of analysis can be particularly useful for alkali-ion technology which requires a well-controlled humidity and a sealed environment.

The XRD patterns were collected using Bruker d8 advanced diffractometer. The following parameters were set to collect X-ray pattern data:
- Detector slit = 9.5 mm
- Beam slit = 0.6 mm
- Range: 2θ = 10°-70°
- X-ray Wavelength=1.5406 Å (Angstroms) (CuKα)
- Speed: 0.36 seconds/step
- Increment: 0.018°

The data thus obtained were analyzed by Fullprof software, a crystallographic tool developed by the Institut Laue-Langevin for Rietveld profiling matching. The XRD patterns were compared to the integrated database of the software and were refined when required.

The stability of the materials on exposure to moist air was analyzed by storing the material at 55% RH (relative humidity) for 24 hours and analyzing the XRD evolution before and after the storage. The controlled humidity of 55% RH was maintained using a saturated solution of Mg (NO₃)₂.6H₂O (Sigma Aldrich) in water. The saturated magnesium nitrate solution and samples under analysis were kept in a sealed desiccator to ensure the required relative humidity.

The XRD patterns of the resultant oxide powders were obtained using powder XRD analysis. The XRD pattern exhibited a single-phase material.

The materials obtained after the second calcination step showed some (nearly 5 w/w %) NiO impurities, as shown in XRD patterns in Figs 6 and 8.

### Example 3: Structural characterization of the synthesized powders by Transmission Electron Microscopy (TEM) analysis

Transmission electron microscopy (TEM) enables a high resolution (up to sub-angstrom range) imaging. When associated with energy dispersive X-ray spectroscopy (EDS) mapping, the TEM allows to determine the crystal structure of a much localized zone of the specimen.

The High-resolution transmission electron microscopy (HRTEM) with energy dispersive X-ray spectroscopy (EDS) mapping was carried out to check the homogeneity of the as prepared (pristine) materials. FEI Titan3 microscope (ThermoFisher Scientific) operated at 200-300 kV was used for these analyses.

The specimens for the TEM analysis were prepared in the argon filled glove box. The dry pristine material was pressed to the copper grid, which was covered with holey carbon films. Then the grid was slightly tapped in order to remove the loose powders. The copper grid with the sodium layered oxide particles for analysis was then carefully transferred to the TEM chamber without exposing to atmospheric air using a Gatan (inc.) vacuum transfer holder.

The TEM-EDS mapping at different positions of the particle obtained after the first calcination step showed sodium rich and sodium poor phases. However, the material obtained after the second calcination step at 1000 °C for 12h were homogeneous.

### Example 4: Electrodes according to the invention

The layered oxides prepared were used for their electrochemical performances and tested in half-cells and full-cells configuration.

The electrodes according to the invention were made by selecting one or more layered oxide compound obtained in Examples 1a.

The layered oxide active materials (positive or working electrode) in all cell configurations were used in powdered form. The layered oxide materials for electrochemical analyses were mixed with 15 w/w % carbon black (super P carbon, TIMCAL) and ball milled for 30 min using SPEX 8000M mixer mill. Hardened steel ball milling container with balls made of hardened steel was used to mill 3 g of oxide with a compound to ball weight ratio of 1:35.

In the example, the electrodes were prepared without binder but use of a binder is encompassed by the invention in particular for commercial products. It should be noted that the use of the powder without binder has shown the results that were equivalent to those prepared with binder (e.g. PVDF and NMP as solvent). Indeed, the preparation without the binder can be of interest in terms of proper loading of each component and of convenience to implement. The current collector used was a thin sheet of aluminum foil.

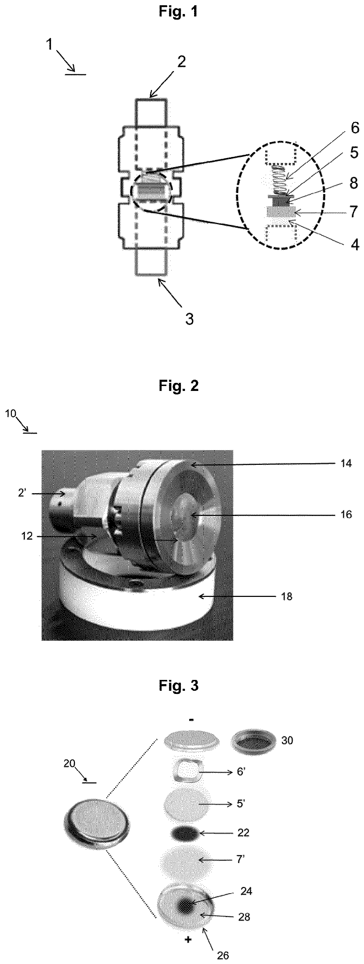

Electrodes put together in order to achieve *Operando* XRD measurements require a special caution while preparing the electrode according to the invention. In reference to the Fig. 2, a beryllium (Be) window 16, an X-ray transparent material, was used as current collector, so that the sodium layered oxide active material mixed with 15 w/w % carbon beneath the Be window 16 can be studied by *operando* XRD analysis. In addition, the Be window 16 at the side on which the powder materials were deposited, was covered with a thin aluminum foil (purchased from Goodfellow, France, with the thickness of 4-5 µm) in order to avoid the reaction of Be window 16 with the electrolyte at high potentials (above 4 V vs. Na⁺/Na). Aluminum foil is thin (4-5 µm) enough to allow X-rays to pass through. In addition, the baseline due to the presence of thin aluminum foil could be removed during the *operando* XRD patterns treatment, by taking the measurements with the aluminum foil alone, before putting the compounds.

The *operando* XRD measurements were carried out in home-made Swagelok type cells made of stainless-steel body (bore) 12 and a stainless-steel plunger 2 on one side and a Be window 16 in the other side as current collectors. The way these cells were assembled is further described in Example 6.

### Example 5: making of negative electrodes with hard carbon

Hard carbon film was used as a negative electrode material for full-cell configuration and it was prepared at ambient atmosphere outside the glovebox. The hard carbon negative electrode powder was provided by Aekyung Petrochemical, Republic of Korea. The average particle size and the BET surface area of this hard carbon was 9 µm and 3.29 m²·g⁻¹ respectively. The hard carbon powder thus obtained was mixed with 4 w/w % conducting carbon (super P carbon from TIMCAL) and binder. The binder used here were either PVDF in N-methyl pyrrolidine (NMP) or carboxymethyl cellulose sodium and/or its derivatives in water solvent. The negative electrode slurry was prepared by mixing active material, conducting carbon and binder in NMP respectively in the ratio of 92:4:4. The slurry thus obtained was coated on an Al foil with a mass loading of 5-6 mg·cm⁻². The coated hard carbon films were calendared to reduce the porosity of the electrode to nearly 50%. The electrodes were cut into circular discs of 8-10 mm diameter and were dried at 80 °C before using in the full-cell assembly and stored in the argon filled glove box.

### Example 6: Electrochemical Half-cell assemblies and their characterization according to the invention

### Half-cell assembly- negative electrode is sodium

Two types of cells were used in half-cell configuration:
- A Swagelok type cell with diameter of 1/2-inch was used for preliminary electrochemical analysis of the synthesized sodium layered oxide materials
- A home-made *operando* XRD cell with inner diameter of 2 cm was used for *operando* XRD analysis.

All cells (i.e. half-cell and full-cells (see below)) were assembled in Argon filled glove box (MBRAUN, Germany) and the cells were ensured to be air tight. The glove box atmosphere during the assembly of the cells was maintained at < 0.1 ppm of O₂ and < 0.1 ppm of H₂O.

For both cells, the positive powder electrode was covered completely with 3 layers of glass fiber separator made of fine fiber glass and purchased from Whatmann, model GF/D (Pore Size: 2.7 µm, Diameter: 5.5 cm; Thickness: 675 µm). In addition, 1M solution of NaPF₆ in propylene carbonate solvent was used as electrolyte for all cell assemblies.

The configuration of both cells is explained below.

### (i) Swagelok type cell used for electrochemical analysis

With reference to Fig. 1, stainless steel Swagelok fitting bored through bulkhead unions (1/2-inch, reference: SS-810-6) were purchased from Swagelok company and were used as the main body of the cell 1. The inner diameter of the bores was adjusted to be 11 mm and the bores were configured to be connected with rods of 11 mm diameter using the end unions and nylon ferrules. The rods used (diameter: 11 mm and height: 5-6 cm) in this set up were termed as plungers 2, 3 and was made of either stainless steel 2 or aluminum 3 depending on the potential window used for the electrochemical analysis. For the present study of sodium layered oxides, plungers made of aluminum 3 were preferentially used as current collector in the positive electrode side when the oxidation potential used in the study was above 4 V vs. Na⁺/Na, but it is not limited to use aluminum plunger when the oxidation potential is below 4 V vs. Na⁺/Na. Similarly, plungers made of stainless steel 2 was used in the negative electrode side. Of course, the aluminum plunger as well can be used in the negative electrode side, as sodium does not form alloy with aluminum. Similarly stainless-steel plunger can be used for positive-electrode side, when the range of potential was below 4 V vs. Na⁺/Na.

The sodium layered oxide active material 4 mixed with 15 w/w % carbon was weighed (4-10 mg) and placed in the middle of the aluminum plunger 2 (diameter = 10 mm), and used as the positive electrode. The negative electrode part used stainless steel disc 5 of 1 mm thickness and 9-10 mm diameter as current collector. A stainless-steel spring 6 and a stainless-steel plunger 2 were covered on top of the stainless-steel disc 5 to apply pressure and the cell 1 was closed both sides with the bulkhead unions (SS-810-6) using nylon ferrules (not represented).

The separator 7 was cut into circular disc of diameter of about 11 mm for electrochemical test cells 1. Around 0.8-1 mL of the electrolyte was used to wet three layers of the separator 7.

The sodium metal 8 for the counter (negative) electrode was cut into a small piece and pressed onto a stainless-steel disc 5 of about 1 mm thickness, using a plastic tweezer. The diameter of the stainless-steel disc 5 was about 8 mm for Swagelok half-cells 1. The stainless-steel disc 5 with the sodium metal 8 was placed on the top of the separator 7 in such a way that the sodium metal 8 is in contact with the separator 7. The cell 1 was finally closed using a screw top, by placing a stainless-steel spring 6 and a stainless-steel plunger 2 on the negative electrode side. The screw top and the main cell body were separated by nylon ferrules purchased from Swagelok company.

### (ii) The half-cell for operando XRD measurements:

With reference to Fig. 2, the *operando* cell 10 used for XRD measurement is similar to the one schematic representation described with reference to Fig.1 and in the reference 10. It has a stainless body 12 with a hole of 2 cm diameter. One end of the cell 10 is attached with a 5 cm large outer ring 14 which is detachable from the main body 12 of the cell 10. The outer ring 14 also has a hole of 2 cm diameter which is normally aligned with the hole of cell body 12 to ensure a proper fitting of the cell body 12 and the outer ring 14. The outer ring 14 is detachable and is connected with the main body 12 using a rubber O-ring (not represented). A Be window 16 of 200 nm thick and 4 cm diameter was placed on the outer ring 14 and this Be window 16 was used as current collector for the positive side instead of aluminum plunger 3 used in the Swagelok cells 1 for electrochemical analyses only.

The Be window 16 was covered with an aluminum foil (purchased from Goodfellow, France) of thickness 4-5 µm to protect the Be window 16 from the reaction with electrolyte at high potentials (above 4 V vs Na⁺/Na). Once the Be window 16 and aluminum foil (not represented) were placed in the outer ring 14, the ring 14 was connected with the main body 12 through an O-ring and the assembly of the ring 14 and the main body 12 were screwed to be held together. A stainless-steel disc 5 of 1 mm thickness and 1.5 cm diameter was used as current collector in the negative electrode side. A stainless-steel spring 6 and stainless-steel plunger 2' of 2 cm diameter was used in the negative side to apply pressure to the cell 10 and the negative part was closed with stainless steel union and nylon ferrules (not represented).

The separator 7 was cut into circular disc of diameter of about 20 mm for the *operando* XRD cells 10. About 2 mL of the electrolyte was used to wet 3 layers of the separators 7.

The sodium metal for the counter electrode was cut into a small piece and pressed onto a stainless-steel disc 5 (about 1 mm thickness) using a plastic tweezer. The diameter of the stainless-steel disc 5 was about 15 mm for the *operando* XRD cell.

The cell 10 was finally closed using a screw top, by placing a stainless-steel spring 6 and a stainless-steel plunger 2' on the negative electrode side. The screw top and the main cell body 12 were separated by nylon ferrules (not shown) purchased from Swagelok company.

### Half-cell electrochemical characterization

All the cell assemblies were done in argon filled glove box (O₂ level< 0.1 ppm and H₂O level < 0.1 ppm), however the testing of the cells was carried out in air atmosphere as the assembled cells were ensured to be air tight.

The cells once assembled were taken out of the glove box and tested for their electrochemical performance. The positive electrode side and the steel plunger on the negative electrode side were used to connect the cell to the potentiostat for analyzing the electrochemical performances.

The Swagelok half-cells thus assembled were cycled galvanostatically (at a constant current) at C/10 within the voltage window of 1.5 - 4V vs. Na⁺/Na and 1.5 - 4.5 V vs. Na⁺/Na. The 1C rate (where 1 C = 246.7 mAh·g⁻¹) for the measurements was calculated using the following formula: $C - rate \left(mAh\right) = Weight of the active compound used in cell assembly \left(in g\right) \times 26.8 \left(mAh⋅{mol}^{- 1}\right) / Molecular weight of the active compound \left(g⋅{mol}^{- 1}\right) .$

Galvanostatic cycling is an electrochemical measurement which consists of observing the voltage evolution of an electrochemical cell at a given current. A stagnation or variation of potential can be associated with an onset of an electrochemical phenomenon. Galvanostatic cycling was carried out for each type of cell (i.e. half-cell or full cell) tested.

Since all the studied sodium layered oxides were prepared to have one sodium at the end of the synthesis, the capacity (mAh·g⁻¹) was computed assuming a complete removal of sodium from the structure. Approximately 4 - 10 mg of the active material was used for Swagelok half-cells and around 40 mg of the active material was used in *operando* XRD cells. The electrochemical analyses were carried out in Biologic (Seyssinet-Pariset, France) potentiostat/galvanostat model MPG-2 or VMP-3.

The cell 10 for operando XRD measurement was placed on the XRD holder using a home-made Teflon holder 18 and connected with a potentiostat VSP 50 (Biologic) for electrochemical analysis (Fig. 2). The cell part with Be window 16 faces the X-rays, so that the X-rays can pass through the Be window 16 and can be diffracted by the active material (sodium layered oxide mixed with 15 w/w % carbon P) in the cell. The *operando* XRD half-cells 10 were typically cycled at C/30 rate and the XRD patterns were recorded for the insertion and/or re-insertion of each 0.05 Na into and/or from the structure respectively.

### Example 7: Electrochemical Full-cell assembly and its characterization according to the invention

With reference to Fig. 3, the full cells were 2032 (diameter = 20mm, height =3.2 mm) coin type cells 20. The hard carbon coated on aluminum foil electrode described in Example 5 was used as negative electrode with 0.8 - 1 mL of 1M NaPF₆ in PC as electrolyte and two layers of glass fiber separator 7' (Whatmann, model GF/D (Pore Size: 2.7 µm, Diameter: 5.5 cm, Thickness: 675 µm). The separator 7' was cut into circular disc of diameter of about 18 mm.

The positive to negative material weight ratio were balanced by harmonizing the practical capacity of each electrode active compound used (i.e. ZNMT/Hard carbon). For example, the hard carbon electrode 22 used in all cell assemblies exhibits a first cycle discharge capacity of 300 mAh·g⁻¹. In this case, as the positive electrode shows about 180 mAh·g⁻¹, the positive to negative material weight ratio of (ZNMT)/(Hard carbon) about 1.7:1 was used in order to counterbalance the capacity of positive electrode. However, the negative hard carbon electrode 22 was used in about 4 w/w % excess to avoid any sodium plating. In other words, an additional amount of negative electrode active material in mg is used to get an additional capacity of 4 % to the actual amount of negative hard carbon required to balance the positive electrode, i.e. the weight in mg of active material corresponding to 12 mAh·g⁻¹, as the hard carbon shows 300 mAh·g⁻¹ practical specific charge capacity.

In other words, once the electrode capacity was known, the quantity of active material on either electrode was adjusted so that, if the capacity ratio of each electrodes is expressed as follows: $Capacity ratio = Positive cell capacity / Negative cell capacity = pc / nc$

Then, the total mass of active compound of each electrode was adjusted so that the negative electrode mass of active compound is as follows: $Negative electrode mass = pos i tive electrode mass \times \left(pc/nc\right) , where pc is lower than nc .$*where pc is lower than nc.*

The positive electrodes in all the full cells 20 were used in the powder form 24 after mixing with 15 w/w % carbon. The 2032-coin cell components were purchased from Shenzhen Yongxingyue precision machinery co. ltd (China) and were made of stainless steel. The positive electrode case 26 of the 2032 cell was covered with an aluminum foil 28 as the oxidation potential used for the cycling was above 4 V vs. Na⁺/Na that can leads to oxidation of stainless-steel components. The sodium layered oxide active material 24 mixed with 15 w/w % carbon was weighed and placed in the middle of the positive electrode case with aluminum (Al) foil. Two layers of separators 7' with the diameter of 18- 19 mm were kept on the top of the positive electrode powder 24 by taking care not to spread the powder to other parts of the cell 20. 0.7 mL of electrolyte was used to wet the separator 7' on top of which hard carbon film 22 used as the negative electrode was placed. The carbon film 22 was covered then by a stainless-steel disc 5' on top of which the spring 6' was placed to provide pressure to the electrodes. Finally, the coin cell 20 was closed by the negative electrode compartment 30 having an O-ring and crimped using the coin cell crimping machine bought from MTI Corporation.

### Full-cell electrochemical characterization

The assembled coin cells 30 were tested in Biologic battery cycler BCS-8 at C/10 within the voltage window of 1.2 - 4 or 4.4 V. A lower discharge potential of 1 V is used exclusively for NaNi_{0.5}Mn_{0.5}O₂ (NM) due to its low redox process. All electrochemical analyses were carried out at room temperature.

The electrodes, half-cells, and/or full cells used for comparative purposes were made, assembled and characterized using the same methods described above in examples 1 to 7, unless specific conditions are explicitly mentioned.

### Example 8: Enhanced Stability of ZNMT1 against humidity

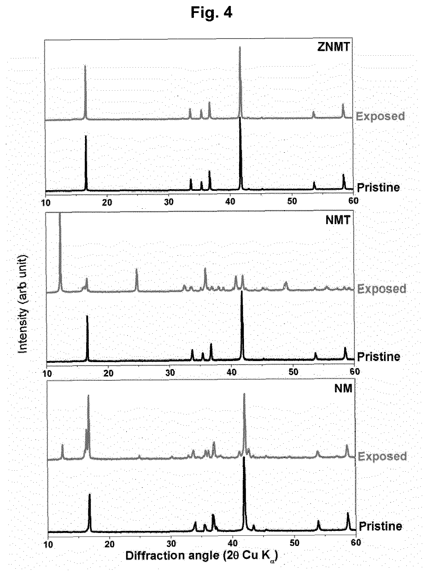

Fig. 4 shows the XRD diffraction pattern of powders of ZNMT1, NMT and NM (pristine) in comparison with the material exposed to 55% Relative Humidity (RH) for 24h (exposed). For the purpose of exposing the materials to a controlled humid atmosphere of 55% RH, a closed desiccator was used. A beaker with around 10 mL of saturated Mg (NO₃)₂.6H₂O that can lead to controlled humidity of 55% was kept in the desiccator. The humidity inside the desiccator was measured using a RH meter and about 50 mg of sodium layered oxide materials under study were kept inside the desiccator. The XRD pattern before and after 24h of exposure to 55% humid air, were analyzed to understand the sensitivity of sodium layered oxide materials to moist air. An intensity reduction is observed for some of the peaks for NMT and NM. Moreover, additional peaks are onset for these materials. These phenomena can be explained by the onset of another new phase initiated by water molecule intercalation between the layers, which gives rise to the two distinct phases of the crystal structure. As a consequence, the decrease of one peak induces an increase of another peak in intensity.

On the other hand, the XRD patterns of ZNMT1 remain stable and no additional peaks appear despite 24h of exposure to humidity. Therefore, ZNMT1 shows an improved stability on exposure to moist air.

### Example 9: Phase transition behavior and capacity retention of ZNMT1 compared with individually doped materials, as evidenced by electrochemical characterizations

The term *"doping"* according to the Electrochemical dictionary, Allen Bard, Springer Verlag, is "... a *controlled addition of a relatively small amount of foreign component (dopant) to solid materials in order to change their properties, or the process of adding impurity atoms. As* a *rule, dopant ions or atoms are incorporated into the crystal lattice of host materials. Depending on the type of host lattice and dopant, the incorporation of foreign species may lead to creation of electronic defects, other point defects, and defect clusters."* However, the term "doping" is used hereafter, by extension, to relate to the presence of some elements in a compound which are in relatively smaller amounts than the other elements.

Electrochemical characterizations were carried out for the half-cells (Na metal negative electrode) and the full cells (Hard carbon negative electrode) as described above. The positive electrode was made of the material of the invention ZNMT1 and compared to similar cells made of other layered oxides: ZNM, NMT and NM.

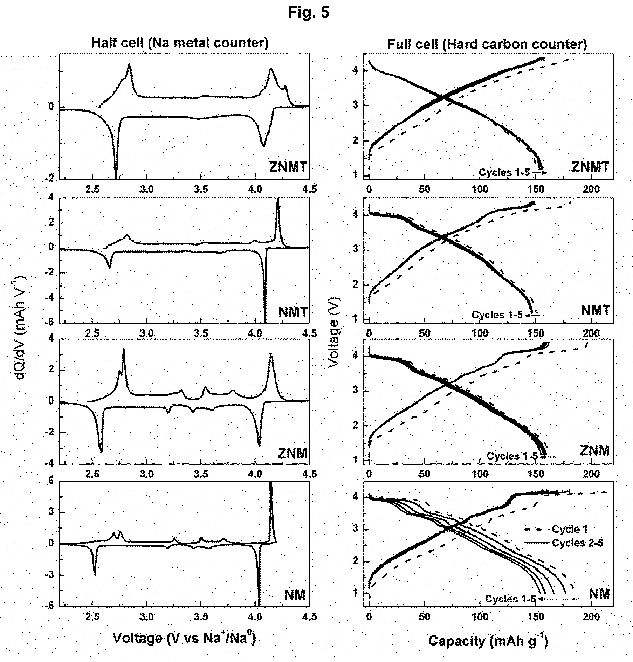

The results are shown in Fig. 5. The plots on the left of Fig. 5 show the differential capacity curve (derivative plot of charge respect to voltage, expressed in mAh·V⁻¹) obtained from the active materials assembled in Swagelok type half-cells (see Example 6).

Each peak of the differential capacity curve corresponds to a plateau in the voltage-capacity curve. In particular, in 3 - 4 V vs. Na⁺/Na voltage range, those peaks reveal the above-mentioned 03 type layered oxide phase transitions.

When comparing NM and ZNM or NM and NMT, the individual doping with Zn²⁺ or with Ti⁴⁺ reduces the associated 03 phase transitions. Specifically, the ZNMT1 shows the best reduction of phase transitions compared to comparative examples.

The right-side plots of Fig. 5 compare the specific capacity (mAh·g⁻¹) and capacity retention for the same materials as the left-side figures, for first 5 cycles in full-cell configuration (see Example 7). Although NM shows the best initial discharge capacity at pristine state, it fades with about 20% of decrease over 5 cycles, a much more significant rate than other samples. ZNMT1, NMT and ZNM material show comparable initial discharge specific capacity (about 150 mAh·g⁻¹). A reduced capacity compared to NM is observed with Zn²⁺ doping as it reduces the amount of redox active Ni²⁺ in the active material.

Among the all studied materials, Zn²⁺, Ti⁴⁺ co-doped material ZNMT1 shows the best stability of the initial discharge capacity over cycles. In other words, the best capacity retention is observed with ZNMT1.

### Example 10: Role of manganese and possibility to substitute manganese by titanium

### Role of Mn⁴⁺ in sodium layered oxide

In this example the role of Mn⁴⁺ within the sodium O3-layered oxide is illustrated. In order to understand the role of Mn⁴⁺ in the doped NaNi_{0.5}Mn_{0.5}O₂ (NM) materials, the powder XRD patterns (Fig. 6a) were obtained from NaNi_{0.45}Zn_{0.05}Ti_{0.5}O₂ (NZT), the material without any Mn⁴⁺ in the structure, and the same material (NZT) was electrochemically characterized with galvanostatic cycling (Fig. 6b). The cells were first tested in half-cell configuration versus sodium metal counter electrode to calculate the practical capacity of the material. The capacity thus calculated from the half cells was used to balance the positive to negative material ratio in the full cells as explained in Example 7. The Na-ion full cells were assembled using hard carbon negative electrode and 1M NaPF₆ in PC as electrolyte. The cells were cycled at C/10 rate between the voltage window of 1.2- 4.4 V.

The XRD pattern in Fig. 6a shows that the material can be prepared in 03 structure with a small amount of NiO impurities as observed with other compositions. Furthermore, the electrochemical characterization in Fig. 6b shows that the NZT reveals a poor reversibility on continuous cycling. Due to the increase of metal-oxygen bond ionicity, the redox potential of the Ti⁴⁺ substituted material increases, so that it became impossible to remove all Na⁺ from the structure within the studied voltage window of 1.2-4.4 V (in full cells). Hardly 0.7 sodium is removed from NZT by oxidizing it to 4.4 V vs. Na⁺/Na.

### Possibility to substitute Mn⁴⁺ by Ti⁴⁺

The synthesis of the 03 phase is possible with increasing Ti⁴⁺ substitution for Mn⁴⁺ in the NM. Indeed, it is possible to obtain phase pure material even with the complete replacement of Mn⁴⁺ by Ti⁴⁺ to produce NZT. However, it was found that the presence of Mn⁴⁺ is essential to have balanced ionic and covalent characters of the metal-oxygen bonds.

### Example 11: Effect of increasing Zn²⁺ doping in ZNMT compounds according to the invention and comparative example

Fig. 7 illustrates the effect of increasing Zn²⁺ doping in the material of the invention and also shows comparative results obtained from NMT material. The data were obtained from Na-ion full cells using electrodes of ZNMT materials of different Zn concentration: 5 and 10 atomic % respectively, named ZNMT1 and ZNMT2 (see table 1) and using hard carbon negative electrode. Both the full cells were cycled at C/10 rate within the potential window of 1.2- 4.4 V.

Fig. 7a shows the specific energy (Wh·kg⁻¹) of each studied material as a function of the cycle number. Fig. 7b shows the energy retention expressed in percentage. An increase in energy retention is observed by increasing the Zn²⁺ doping from 5 atomic % (ZNMT1) to 10 atomic % (ZNMT2). However, the synthesis trials to introduce more than 10 atomic % Zn in the material results in ZnO impurity and no significant change in capacity retention was observed above 10 atomic % Zn. But, the doping of Zn²⁺ beyond 10 atomic % (e.g.20%) appears to lead to an increase of ZnO impurities. This result reveals a preferred threshold content up to which the Zn can be doped within the layered oxide in order to optimize a capacity retention while preserving a lower ZnO impurity. On the other hand, the amount of Ti⁴⁺ doping can be varied between 0 and 50 atomic % as shown in Example 10.

### Example 12: Effect of increasing Ti⁴⁺ doping in ZNMT materials according to the invention: ZNMT3

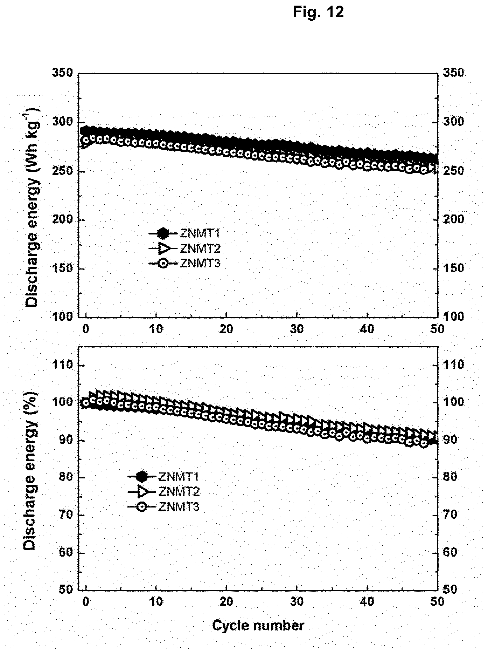

Fig. 8 illustrates the effect of increasing Ti⁴⁺ doping in ZNMT. Fig. 8a shows the powder XRD pattern obtained for ZNMT3 and Fig. 8b shows galvanostatic charge-discharge cycles for first 5 cycles obtained from ZNMT3. The full-cell was assembled according to the Example 7, using ZNMT3 mixed with 15 w/w % carbon black as positive electrode (Example 4), and hard carbon film negative electrode (Example 5) and 1M NaPF₆ in propylene carbonate as electrolyte. The cells were cycled at C/10 rate within the voltage window of 1.2-4.4 V. The XRD pattern in Fig. 8a shows that the material can be prepared in 03 structure with small amount of NiO impurities as observed with other compositions. The ZNMT3 material having more Ti⁴⁺ in comparison to ZNMT1 shows a comparable capacity retention as shown in Fig. 8b (see also Fig. 12).

### Example 13: Effect of replacing Zn²⁺ with another cation, Mg²⁺

In this example, Mg²⁺ (ionic radius = 0.76 A) having a similar ionic radius as that of Zn²⁺ (ionic radius = 0.74 Å) was used to replace Zn²⁺.

Fig. 9 shows a comparative full-cell cycling performance of Mg²⁺, Ti⁴⁺ co-doped NaNi_{0.5}Mg_{0.05}Mn_{0.4}Ti_{0.1}O₂ (Mg-doped NMT or NMMT) with that of Mg²⁺ un-doped NaNi_{0.5}Mn_{0.4}Ti_{0.1}O₂ (NMT) cycled at C/10 at the extended voltage window of 1.2 - 4.4 V. The Mg²⁺ co-doping slightly improves the capacity retention despite the decrease in initial discharge capacity compared to NMT. However, the improvement in capacity retention induced by Mg²⁺ doping is not as good as that of Zn²⁺

### Example 14: Reduced phase transition of ZNMT1 material compared with NM and NMT, as evidenced by operando XRD analysis carried out until a voltage of 4.0 V vs. Na⁺/Na

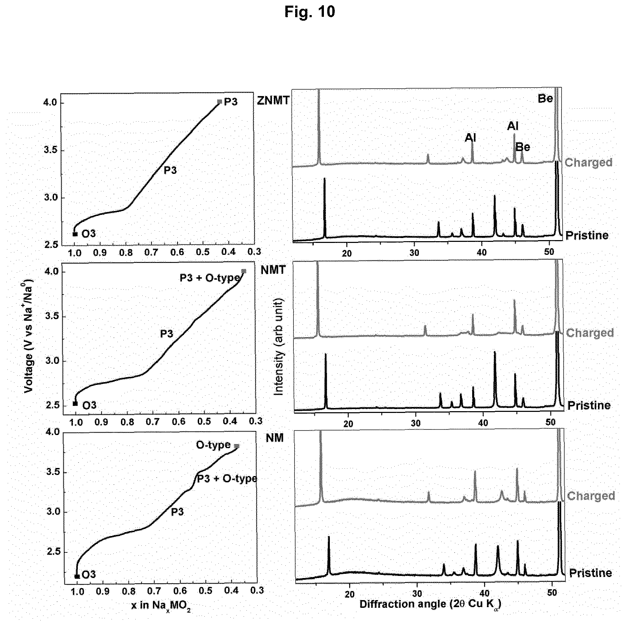

Fig. 10 illustrates the first charge curve (left) with that of *in operando* XRD patterns of the pristine and end-of-charge phase of the bare 03 NaNi_{0.5}Mn_{0.5}O₂ (NM), Ti⁴⁺ doped NaNi_{0.5}Mn_{0.4}Ti_{0.1}O₂ (NMT) and Zn²⁺, Ti⁴⁺ co-doped NaNi_{0.45}Zn_{0.05}Mn_{0.4}Ti_{0.1}O₂ (ZNMT1). The electrochemical analyses were carried out in *operando* XRD cells using metallic sodium (half-cell) as negative electrode and the cells were cycled at C/30 rate in the voltage windows of 1.5-4.0 V vs. Na⁺/Na (except for NM in 1.5-3.8 V vs. Na⁺/Na and for the first discharge). In other words, the charge potential was controlled to remove nearly 0.6 Na from the structure. The corresponding *operando* XRD measurements were followed through-out and the XRD patterns at the pristine phases in comparison with the corresponding end of charge phases alone are shown on Fig. 10 (right) for clarity purpose. "Pristine" means the XRD patterns were obtained in the as assembled XRD cell before any electrochemical reaction (XRD of the end of synthesis phase) and "Charged" means the XRD patterns were obtained at the end of charge (at the voltage = 4.0 V vs. Na⁺/Na).

The phase transition from 03 to P3 is observed with all compounds irrespective of the Ti⁴⁺ and Zn²⁺ doping. It shows that the stabilization due to Na-vacancy ordering in the P3 structure is higher than the destabilization created due to Zn²⁺ (steric effect) and the increase in ionicity of the crystal lattice. In contrast, a notable difference is observed with 4 V O-type phase, whose evolution is delayed with Ti⁴⁺ substitution and ***completely*** eliminated with Zn²⁺, Ti⁴⁺ co-doped ZNMT1 material within the studied voltage window.

### Example 15: Reduced phase transition of ZNMT1 material compared with NM and NMT, as evidenced by operando XRD analysis carried out until a voltage of 4.4 V vs. Na⁺/Na

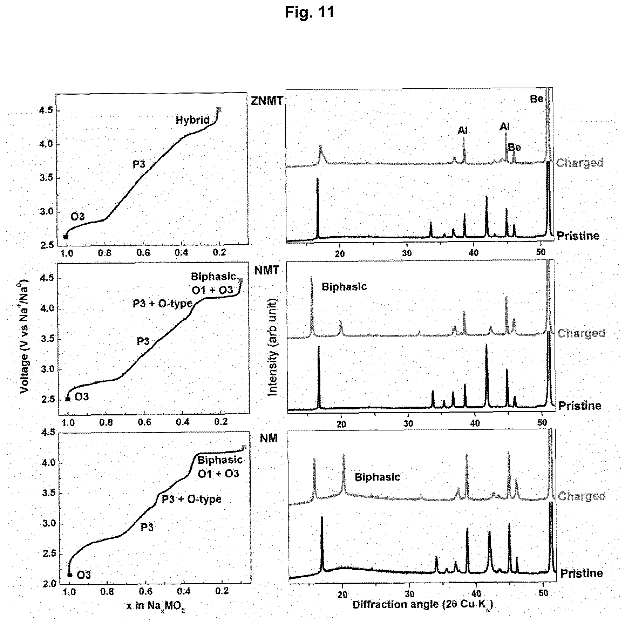

Fig. 11 illustrates the same type of experiment as Example 14; however, the potential was controlled from up to 4.4 V vs Na⁺/Na, in order to remove 0.8 to 1 sodium from the structure. This way, the phase transition behavior of ZNMT1 at its full capacity can be compared to that of NM, NMT.

The electrochemical analyses were done in *operando* XRD half-cells using metallic sodium as negative electrode and the cells were cycled at C/10 rate.

On the one hand, the potential according to the amount of sodium curve in the left shows that both NM and NMT materials reveal a plateau at the end of charge, a signature of presence of two separate phases (O1 and 03), in which the O1 phase has a very small sized unit cell, - the smallest repeating unit having the full symmetry of the crystal structure -, in comparison with the pristine material.

The extent of change in unit cell can be directly visualized from the d-value of the (003) peak, which is an indicator of the c-axis of the unit cell. If the peak appears at high angle, the corresponding d-spacing is small and hence the unit cell is small. For the NM materials, the d-spacing varies from 5.21 Å for the pristine 03 to 4.36 Å for the fully charged phase. Similarly, a reduction in d-spacing of 5.29 Å to 4.41 Å was observed with NMT phase on moving from pristine 03 to charged O-type phase. These reductions observed with NM and NMT represents the concomitant reduction in the unit cell volume.

On the other hand, ZNMT shows no plateau at the end of the charge. Furthermore, XRD features at a charged state is characterized by a broad peak with (003) at 5.17 Å which shows a very small reduction from the pristine d (003) = 5.25 Å. The results indicate that the overall change in the unit cell of ZNMT is very low in comparison to the NMT and NM materials. The observation of broad peaks in the XRD represents a hybrid structure with different layer stacking and/or stacking faults. The behavior is expected to be associated with the partial retention of P3 stacking at the end of charge and/or the migration of transition metal ion to the van der Waals gap that reduce further gliding of layer to form O-type phase with reduced unit cell volume.

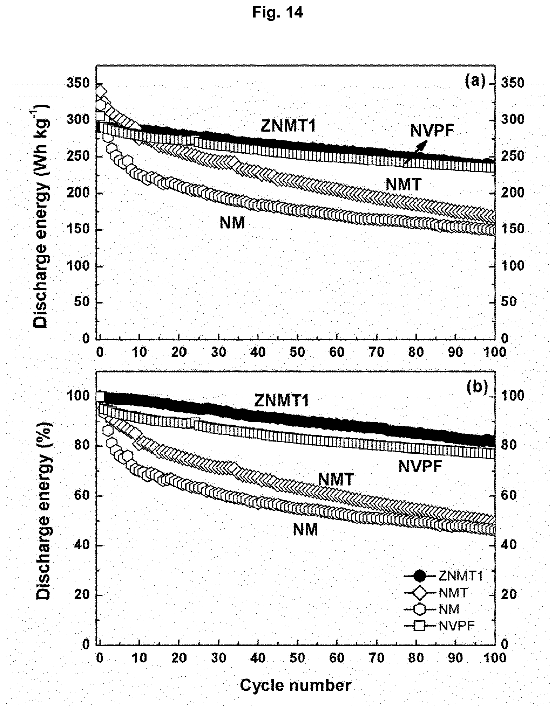

Due to such reduced phase transitions and small change in unit cell volume, the ZNMT1 retains its structural stability on long cycling, thereby improving the cycle life of the material even in the extended voltage window of 1.2- 4.4 V (see Fig. 14 and Example 17).

### Example 16: Comparison between ZNMT1, ZNMT2 and ZNMT3 in terms of discharge energy density and energy retention

Fig. 12 shows the evolution of discharge energy (Wh·kg⁻¹), and the energy retention in percentage over fifty cycles for ZNMT1, ZNMT2 and ZNMT3 according to the invention. These materials were cycled in full-cell configuration at C/10 rate from 1.2 - 4.4 V, according to Example 7. At the end of fifty cycles, about 10 % of decrease is observed for the three specimens.

The energy evolution for these samples is similar and the difference between each specimen may go within the error limit.

### Example 17: Energy retention of ZNMT1 full cells over 100 cycles and comparison with other materials at different voltages (4 or 4.4 V vs. Na⁺/Na)

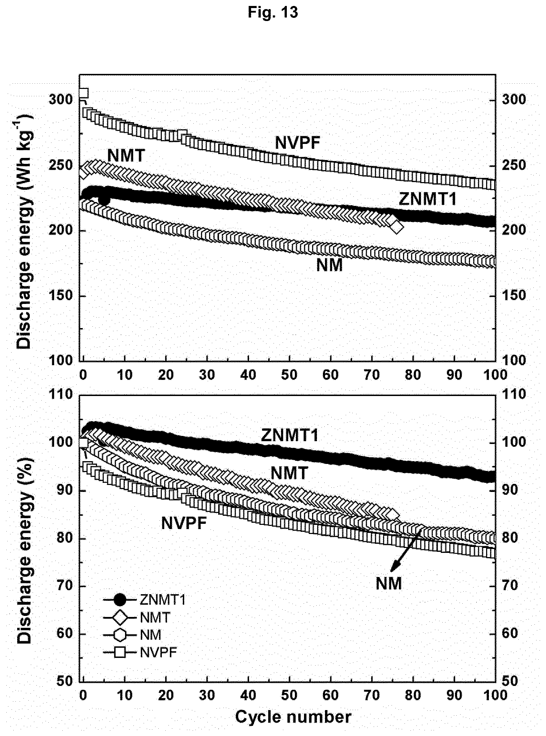

Fig. 13 shows (a) the evolution of discharge energy (Wh·kg⁻¹), and (b) the energy retention in percentage over a hundred cycles for the layered oxide according to the invention ZNMT1 compared with material NMT and NM. These materials were cycled at C/10 rate from 1.2-4 V with the exception of the NM, cycled from 1.2-3.8 V.

In addition, a full cell using the polyanionic material Na₃V₂(O₄)₂F₃ (named as NVPF) received from Energy hub, Amiens, was also tested for comparative purposes. The data obtained for NVPF are identical for Figs 13 and 14. NVPF was tested in the same conditions as the layered oxides except the voltage range. The voltage range for NVPF was optimized to maximize its energy and cyclability according to Yan et al, Nature communications, **10,** 585 (2019) (ref. 11). For first cycle, the voltage windows (1 - 4.65 V) was determined to remove 2.35 Na from Na₃V₂(PO₄)₂F₃. Then, the cell was subsequently cycled between 2 V and 4.3 V.

The energies for all the specimen were normalized for the total mass of positive and negative active materials on the electrodes. Best retention in energy is observed for ZNMT1 (about 10 % of decrease after a hundred cycles) which is in accordance with the reduced phase transitions observed in Example 14, whereas NVPF shows almost 25 % of decrease after a hundred cycles, despite a superior discharge energy at pristine state (i.e. after the first cycle) (300 Wh·kg⁻¹ for NVPF against 225 Wh·kg⁻¹ for ZNMT1)

Fig. 14 shows the same experiment in which the layered oxides were cycled within the voltage window of 1.2-4.4 V, with the exception of the NM, which was cycled from 1.2-4.2 V. NVPF were cycled at the same condition as Fig. 13.

Best retention in energy is observed for ZNMT1 (20 % of decrease after a hundred cycles), which is in accordance with the reduced phase transitions observed in Examples 9 and 15.

The results obtained at a voltage of 4.4 V, a condition that had not been favorable to sodium O3-layered oxide material to date, confirm a superior performance of ZNMT1 compared to NVPF, as the latter was being characterized in an optimized condition to maximize its performance.

ZNMT1 can be cycled to a voltage higher than 4.0 V without a significant loss over a hundred cycles. For example, 90% of initial capacity is preserved over a hundred cycles at 4.0 V and 80 % of initial capacity is preserved over a hundred cycles at 4.4 V given that NVPF shows a steeper decrease of capacity (about 75% of initial capacity is preserved at 4.4 V). Zn²⁺ enhances the steric effect, which effectively reduces the phase transitions during cycling.

### CITED REFERENCES

1. S. Roberts and E. Kendrick, The Re-Emergence of Sodium Ion Batteries: Testing, Processing, and Manufacturability. Nanotechnol. Sci. Appl., 11, 23-33 (2018).
2. J. Deng, W.-B. Luo, S.-L. Chou, H.-K. Liu, and S.-X. Dou, Sodium-Ion Batteries: From Academic Research to Practical Commercialization. Adv. Energy Mater., 8, 1701428 (2018).
3. C. Delmas, C. Fouassier, and P. Hagenmuller, Structural Classification and Properties of the Layered Oxides. Phys. BC, 99, 81-85 (1980).
4. K. Smith, J. Treacher, D. Ledwoch, P. Adamson, and E. Kendrick, Novel High Energy Density Sodium Layered Oxide Cathode Materials: From Material to Cells. ECS Trans., 75, 13-24 (2017).
5. K. Kubota, S. Kumakura, Y. Yoda, K. Kuroki, and S. Komaba, Electrochemistry and Solid-State Chemistry of NaMeO2 (Me = 3d Transition Metals). Adv. Energy Mater., 8, 1703415 (2018).
6. S. Mariyappan, Q. Wang and J-M. Tarascon, "Will sodium layered oxides- ever be successful candidate for sodium ion battery applications?", Journal of the Electrochemical Society. 165 (16) p. A3714- A3722 (2018).
7. R. Dugas, B. Zhang, P. Rozier, and J. M. Tarascon, Optimization of Na-lon Battery Systems Based on Polyanionic or Layered Positive Electrodes and Carbon Anodes. J. Electrochem. Soc., 163, A867-A874 (2016).
8. M. Sathiya, Q. Jacquet, M.-L. Doublet, O. M. Karakulina, J. Hadermann and J.-M. Tarascon, A Chemical Approach to Raise Cell Voltage and Suppress Phase Transition in 03 Sodium Layered Oxide Electrodes. Adv. Energy Mater., 8, 1702599 (2018).
9. L. Zheng and M. N. Obrovac, Investigation of O3-Type Na0.9Ni0.45MnxTi0.55-xO2 (0 ≤ x ≤ 0.55) as Positive Electrode Materials for Sodium-Ion Batteries. Electrochimica Acta, 233, 284-291 (2017).
10. A. S. Prakash, D. Larcher, M. Morcrette, M. S. Hedge, J-B. Leriche, and C. Masquelier, Chem. Mater. 17, 4406-4415 (2005)
11. G. Yan, S. Mariyappan, G. Rousse, Q. Jacquet, M. Deschamps, R. David, B. Mirvaux, J. W. Freeland, J.-M. Tarascon, Higher energy and safer sodium ion batteries via an electrochemically made disorderd Na3V2(PO4)2F3 material, Nature communications, 10, 585 (2019).

## Claims

1. A compound of formula I:
NaₓNi_{0.5-y}Zn_{y}Mn_{0.5-z}Ti_{z}O₂ (I),
wherein
x is a number ranging from 0.7 and 1.1,
y is a number superior to 0 and up to 0.1, and
z is a number between 0 and 0.5.

2. The compound according to claim 1, wherein x is about 1.

3. The compound according to claim 1 or 2, wherein y is a number ranging from 0.01 and 0.1, and z is a number ranging from 0.01 and 0.45.

4. The compound according to any one of claims 1 to 3, wherein y is a number ranging from 0.03 and 0.1, and z is a number ranging from 0.05 and 0.25.

5. The compound according to anyone of claims 1 to 4, wherein y is a number ranging from 0.04 and 0.1, and z is a number ranging from 0.08 and 0.22.

6. The compound according to anyone of claims 1 to 5, wherein an initial discharge capacity of said compound is at least about 120 mAh·g⁻¹, preferably is at least about 150 mAh·g⁻¹, as measured at a discharge rate which ranges from C/30 to 1C.

7. The compound according to anyone of the claims 1 to 6, wherein a specific energy is at least about 200 Wh·kg⁻¹ when cycled at a voltage inferior to 4 V and the specific energy is at least about 250 Wh·kg⁻¹ when cycled at a voltage superior to 4 V.

8. The compound according to anyone of claims 1 to 7, wherein the energy retention is superior to 70%, preferably from 75 to 85%, over a hundred cycles when cycled at a voltage superior to 4 V.

9. The compound according to anyone of Claims 1 to 8, wherein the specific energy of the cell is at least about 200 Wh·kg⁻¹ when cycled at a voltage inferior to 4 V and the specific energy is at least about 250 Wh·kg⁻¹ when cycled at a voltage superior to 4 V.

10. The compound according to anyone of Claims 1 to 9, wherein the energy retention percentage of the compound of the invention at a voltage superior to 4 V, ranges from 73% to 99%; preferably from 78 % to 95%, e.g. from 80 to 90%.

11. An electrochemical cell comprising:
- a negative electrode configured to reversibly accept sodium ions from an electrolyte and to reversibly release sodium ions to the electrolyte, the negative electrode having at least one current collector;
- a positive electrode comprising a compound according to anyone of the claims 1 to 10, configured to reversibly accept sodium ions from the electrolyte and to reversibly release sodium ions to the electrolyte, the positive electrode having at least one current collector; and
- a separator soaked with the electrolyte comprising sodium ions, in contact with both the negative and positive electrodes.

12. The electrochemical cell according to claim 11, wherein the separator is selected from glass fiber, polyolefin separator and cellulose-based film.

13. The electrochemical cell according to claim 11 to 12, wherein the negative electrode comprises sodium metal, a carbonaceous compound, hard carbon, antimony, tin, phosphorous or a mixture thereof.

14. The electrochemical cell according to one of the claims 11 to 13, wherein the cell is a coin cell, a pouch cell, a cylindrical cell, or a prismatic cell.

15. Use of a compound as described in anyone of claims 1 to 10 as an electroactive compound in a cell or a battery, preferably as a positive electrode material.
